# EUROPÄISCHE PATENTSCHRIFT

(11) **EP 2 002 100 B1**
(45) Veröffentlichungstag und Bekanntmachung des Hinweises auf die Patenterteilung: **13.05.2015**
(21) Anmeldenummer: 07727432.2
(22) Anmeldetag: 28.03.2007
(51) Int. Cl.: F02D 9/10, F16K 1/226, F16K 31/52, F02M 13/04

(54) **ANSAUGROHR FÜR EINE BRENNKRAFTMASCHINE**
INTAKE PIPE FOR AN INTERNAL COMBUSTION ENGINE
COLLECTEUR D'ADMISSION POUR UN MOTEUR À COMBUSTION INTERNE

(30) Priorität: 31.03.2006 DE 102006015061
(43) Veröffentlichungstag der Anmeldung: 17.12.2008
(73) Patentinhaber: Siemens Aktiengesellschaft, 80333 München (DE)
(72) Erfinder: DEISS, Siegfried, 93099 Mötzing (DE); MEHNE, Georg, 93173 Wenzenbach (DE)
(74) Vertreter: BRP Renaud & Partner mbB Rechtsanwälte Patentanwälte Steuerberater
(86) Internationale Anmeldenummer: PCT/EP2007/052959
(87) Internationale Veröffentlichungsnummer: WO 2007/113185

(56) Entgegenhaltungen:
- WO-A-2004/065772
- DE-A1- 19 800 207
- DE-C- 432 953

## Beschreibung

Die Erfindung betrifft ein Ansaugrohr für eine Brennkraftmaschine mit einem luftdichten Gehäuse, dass mehrere Luftkanäle aufweist. Mindestens zwei Drallklappen sind in mindestens einem Luftkanal drehbar angeordnet und weisen jeweils eine entlang des Querschnitts des Luftkanals verlaufende Welle auf, wobei jeweils ein Anlenkhebel an einem Ende jeder Welle und außerhalb des Luftkanals angeordnet ist. Eine Koppelstange verbindet alle Anlenkhebel mit einander.

Zur Änderung der Lädungsbewegung der Ansaugluft werden üblicherweise Drallklappen verwendet, die senkrecht zur Anströmungsrichtung in das Ansaugmodul eingebaut werden. Zum Schutz der Drallklappenmechanik wird diese im Gehäuse untergebracht. Zur Betätigung der Drallklappen sind mehrere Möglichkeiten bekannt.

Beispielsweise wird in der Druckschrift DE 10 2004 A008 255 A1 die Koppelstange von einem im Gehäuse befindlichen Aktuator über einem Getriebe angetrieben. Dies hat den Nachteil, dass der Aktuator bei einem Defekt nicht getrennt ausgetauscht werden kann, da das Gehäuse meist Luftdicht verschweißt ist.

In einer anderen bekannten Ausführungsform wird stattdessen der Aktuator außerhalb des Gehäuses angeordnet. Der Aktuator treibt die innerhalb des Gehäuses befindliche Koppelstange direkt an. Dabei muss gewährleistet sein, dass die Luftkanäle des Ansaugrohrs von der Umgebung dicht abgetrennt sind. Somit hat dies den Nachteil, dass jede Welle einer Drallklappe mit einer Dichtung versehen sein muss. Darüber hinaus benötigt eine solche Ausführungsform ein sehr hohes Packmaß.

WO 2004/065772 offenbart eine solche Konstruktion.

Somit liegt der vorliegenden Erfindung die Aufgabe zugrunde, die oben erwähnten Nachteile zu vermeiden.

Die Aufgabe wird durch die Merkmale des unabhängigen Anspruchs 1 gelöst. Gegenstand der Ansprüche 2 bis 5 betreffen vorteilhafte Ausgestaltungen der erfindungsgemäßen Vorrichtung.

Erfindungsgemäß kann das Ansaugrohr für eine Brennkraftmaschine ein luftdichtes Gehäuse mit mehreren Luftkanälen aufweisen. Ferner kann das Ansaugrohr mindestens zwei Drallklappen aufweisen, die in mindestens einem Luftkanal drehbar angeordnet sind und jeweils eine entlang des Querschnitts des Luftkanals verlaufende Welle aufweisen können. Dabei kann jeweils ein Anlenkhebel an einem Ende ihrer Welle und außerhalb des Luftkanals angeordnet sein. Eine Koppelstange kann mit allen Anlenkhebel verbunden sein. Die Koppelstange und die Anlenkhebel sind innerhalb des Gehäuses angeordnet. Dabei ist an dem anderen Ende einer einzigen Welle ein Betätigungshebel befestigt und außerhalb des Gehäuses angeordnet.

Dies bietet den Vorteil eines geringen Packmaßes und verringert den Dichtungsaufwand an den Wellen erheblich.

Die Erfindung wird nachfolgend unter Bezugnahme auf die schematische Zeichnung beispielhaft erläutert. Dabei zeigen:
- Figur 1: eine Explosionszeichnung einer vorteilhaften Ausgestaltung der Klappenmechanik;
- Figur 2: die vorteilhafte Ausgestaltung der Klappenmechanik im eingebauten Zustand aus Figur 1;
- Figur 3: einen Schnitt durch einen Luftkanal eines Ansaugrohrs samt Drallklappen-Mechanik, und
- Figur 4: einen Schnitt durch eine vorteilhafte Ausgestaltung einer Dichtung.

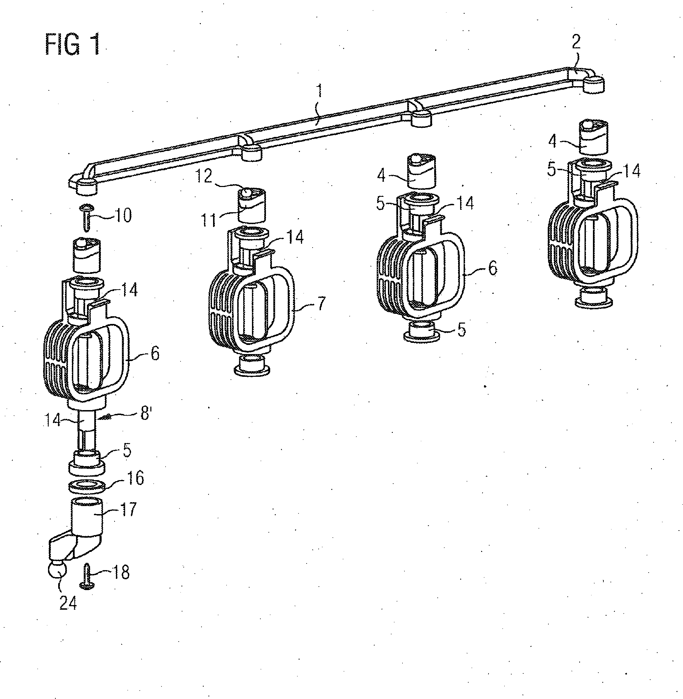

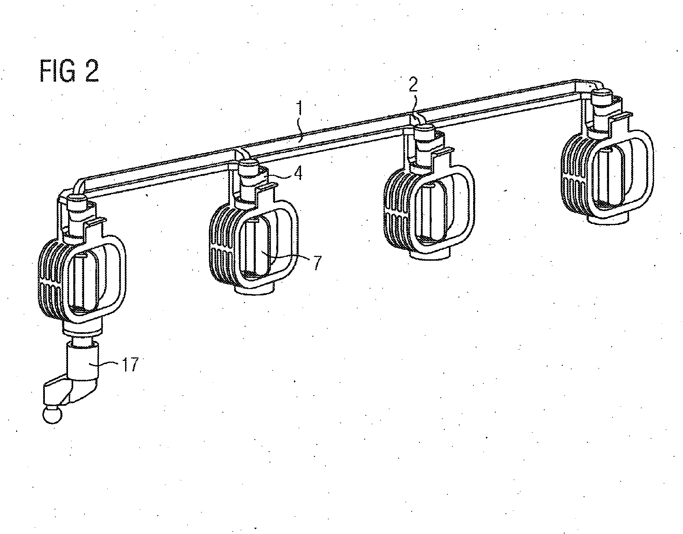

Die Figur 1 zeigt eine Explosionszeichnung einer vorteilhaften Ausgestaltung einer Drallklappenmechanik. In Figur 2 ist diese Mechanik im zusammengebauten Zustand zu sehen. Eine Koppelstange 1 weist vier senkrecht abstehende Finger 2 auf an den freien Enden der Finger sind Aufnahmeschalen angeformt, die einen Teil eines Kugelgelenkes bilden. Jeder mit einer Drallklappe versehene Luftkanal weist folgende Elemente auf: ein Anlenkhebel 4, zwei Lagerhülsen 5, einen Rahmen 6 und eine Klappe 7 samt Welle 8.

Die Klappe 7 befindet sich innerhalb des Rahmens 6, wobei ein Ende 14 der Welle 8 aus dem Rahmen 6 herausragt. Die Welle 8 wird mit Hilfe der Lagerbuchsen 5 im Rahmen 6 gelagert. An jedem Ende der Welle 8 wird eine solche Lagerhülse 5 aufgeschoben. An dem aus dem Rahmen 6 herausragende Ende 14 der Welle 8 wird ferner mit Hilfe einer Schraube 10 der Anlenkhebel 4 befestigt. Der in dem Wesentlich zylindrisch geformten Anlenkhebel 4 weist einen senkrecht zur Drehachse ragenden Arm 11 auf. Am freien Ende des Armes 11 ist eine Kugel 12 angeformt, die in die Aufnahmeschale der Koppelstange 1 einrastet und das zweite Element eines Kugelgelenkes bildet.

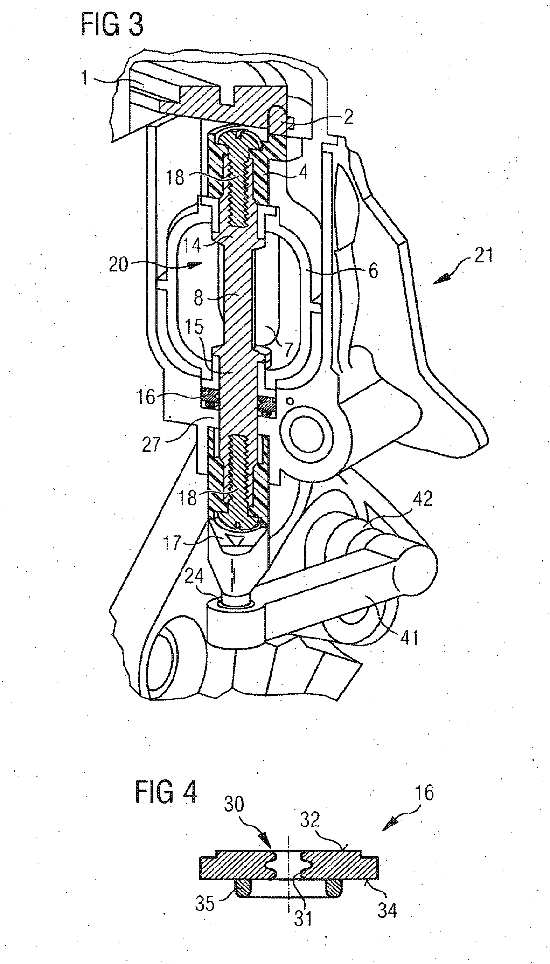

Wie aus den Figuren 1 und 2 zu entnehmen ist ragt die Welle 8. der linken Drosselklappe auf beiden Seiten des Rahmens 6 heraus. Das eine Ende 14 der Welle 8' ist genauso geformt wie die anderen Enden der anderen Drosselklappen. Das andere Ende 15 der Welle 8' ist im Gegensatz zu den anderen Wellen verlängert und ragt aus dem Rahmen 6 heraus. Auch auf dieses andere Ende 15 wird eine Lagerhülse 5 aufgeschoben. Ferner kann zusätzlich eine Dichtung 16 aufgeschoben werden. Eine besondere Ausführungsform einer solchen Dichtung ist in Figur 4. gezeigt. Nach dieser Dichtung 16 wird ein Betätigungshebel 17 mit Hilfe einer weiteren Schraube 18 an die Welle 8 befestigt.

Figur 3 zeigt einen Schnitt durch einen Luftkanals 20 eines Ansaugmoduls 21 samt Drallklappenmechanik. Der Schnitt geht durch die Welle 8', die auf beiden Seiten des Rahmens 6 ragt.

Im oberen Teil der Figur 3 ist die Koppelstange 1 zu erkennen, die innerhalb des Gehäuses luftdicht verschlossen angeordnet ist. Die Aufnahmeschale eines freien Fingers 2 der Koppelstange 1 ist mit der Kugel 12 des Anlenkhebels 4 verbunden. Der Rahmen 6 ist in dem Luftkanal 20 eingepasst. Wie vorher schon erwähnt befindet sich innerhalb des Rahmens 6 die Drallklappe 7. Das eine Ende 14 der Welle 8 ragt nach oben außerhalb des Rahmens 6 raus. An diesem Ende 14 ist der Anlenkhebel 6 mit Hilfe einer Schraube 18 befestigt. Das andere Ende 15 der Welle 8' ragt diametral gegenüberliegend auf der anderen Seite des Rahmens 6 heraus. Wie aus der Figur 3 zu entnehmen ist, befindet sich die Lagerhülse 5 zwischen den beiden Enden 14 und der Welle 8' und den Rahmen 6. Das andere Ende 15 der Welle 8' weist innerhalb des Gehäuses des Ansaugrohrs 21 die Dichtung 16 auf. Diese Dichtung stützt sich dabei gegen das andere Ende 15 der Welle ab und drückt sich gegen das Gehäuse des Ansaugmodules 21 ab.

Diese Konstruktion bietet den immensen Vorteil, dass lediglich durch eine einzige Lagerung gegenüber der Umgebung abgedichtet werden muss. Die einen Enden 14 der Welle 8 befinden sich nämlich auf der gegenüberliegenden Seite (oben der Figur 3) im luftdicht abgeschotteten Gehäuse des Ansaugrohrs 21. Lediglich an dieser nach unten weisenden Stelle (Figur 3 um Dichtung 16) wird eine Betätigung nach außen geführt. Da der Betätigungshebel 17 ähnlich geformt ist wie die Anlenkhebel 4, ist es ohne weiteres möglich an die. Kugel 24 des Betätigungshebels 17 jede beliebige Art von Aktuator anzuschließen. Dies wird durch Hebelmechanik 41 und 42 angedeutet. Dies hat den Vorteil, dass bei einem defekten Aktuator dieser ohne weiteres ausgebaut werden kann. Darüber hinaus kann der Automobilhersteller den Aktuator von jedem beliebigen Hersteller verwenden.

Figur 4 zeigt einen Schnitt durch eine vorteilhafte Ausgestaltung einer Dichtung 16. Diese Dichtung 16 ist scheibenförmig. In der Mitte der Dichtung 16 ist eine Öffnung 30 zur Aufnahme des anderen Ende 15 der Welle 8' vorgesehen. In diese Öffnung ragt mindestens eine Lippe 31 hinein. Die obere Fläche 32 der Dichtung 16 weist einen Absatz 33 auf, der wie in Figur 3 zu entnehmen ist, sich an den Rahmen 6 abstützt. Die restliche Fläche 32 stützt sich gegen die Lagerhülse 5 ab. Aus der gegenüberliegenden Fläche 34 der Dichtung 16 ragt ein ringförmiger Fuß 35 hervor. Dieser Fuß 35 liegt gegen den Vorsprung 27 des Gehäuses des Ansaugrohrs 21 an.

## Patentansprüche

1. Ansaugrohr für eine Brennkraftmaschine mit:
- einem luftdichten Gehäuse, das mehrere Luftkanäle (20) aufweist,
- mindestens zwei Drosselklappen (7) die in mindestens einem Luftkanal (20) drehbar angeordnet sind und jeweils eine entlang des Querschnitt des Luftkanals (20) verlaufende Welle (8, 8') aufweisen, wobei jeweils ein Anlenkhebel (4) an einem Ende (14) jeder Welle (8, 8') und außerhalb des Luftkanals (20) angeordnet ist,
- einer Koppelstange (1), die mit allen Anlenkhebel (4) verbunden ist, wobei die Koppelstange (1) und die Anlenkhebel (4) innerhalb des Gehäuses angeordnet sind,
**dadurch gekennzeichnet, dass** an dem anderen Ende (15) einer einzigen Welle (8') ein Betätigungshebel (17) befestigt und außerhalb des Gehäuses angeordnet ist.

2. Ansaugrohr nach Anspruch 1, **dadurch gekennzeichnet, dass** auf dem anderen Ende (15) der einzigen Welle (8') eine innerhalb des Gehäuses befindliche Dichtung (16) aufgebracht ist, die einerseits dicht an der Welle (8') und andererseits dicht am Gehäuse (27) anliegt.

3. Ansaugrohr nach Anspruch 2, **dadurch gekennzeichnet, dass** die Dichtung (16) eine profilierte Ringscheibe mit mindestens einer in die Öffnung (30) der Dichtung ragenden Lippe (31) und/oder mit einer auf einer Fläche der Dichtung ragender ringförmiger Fuß (35) ist.

4. Ansaugrohr nach mindestens einem der vorherigen Ansprüche, **dadurch gekennzeichnet, dass** die Anlenkhebel (4) und/oder der Betätigungshebel (17) an der Welle mittels Schraub- und/oder Rastverbindungen befestigt sind.

5. Ansaugrohr nach mindestens einem der vorherigen Ansprüche, **dadurch gekennzeichnet, dass** die Anlenkhebel und die Koppelstange über Kugelkopfgelenke (12) miteinander verbunden sind.

## Claims

1. Intake pipe for an internal combustion engine, comprising:
- an airtight housing having a plurality of air ducts (20),
- at least two throttle valves (7) that are rotatably arranged in at least one air duct (20) and each have a shaft (8, 8') that extends along the cross section of the air duct (20), a link lever (4) being arranged in each case on one end (14) of each shaft (8, 8') and outside the air duct (20),
- a coupling rod (1) that is connected to each link lever (4), the coupling rod (1) and the link levers (4) being arranged inside the housing,
**characterised in that** an actuating lever (17) is fastened to the other end (15) of one of the shafts (8') and is arranged outside the housing.

2. Intake pipe according to claim 1, **characterised in that** a seal (16) located inside the housing is attached to the other end (15) of said one shaft (8') and tightly abuts the shaft (8') on one side and the housing (27) on the other side.

3. Intake pipe according to claim 2, **characterised in that** the seal (16) is a profiled washer comprising at least one lip (31) that protrudes into the opening (30) in the seal and/or comprising an annular base (35) that protrudes on a surface of the seal.

4. Intake pipe according to at least one of the preceding claims, **characterised in that** the link levers (4) and/or the actuating lever (17) are attached to the shaft by means of screw connections and/or latching connections.

5. Intake pipe according to at least one of the preceding claims, **characterised in that** the link levers and the connecting rod are interconnected by means of ball-and-socket joints (12).

## Revendications

1. Tubulure d'admission pour un moteur à combustion interne, comprenant :
- un boîtier étanche à l'air, qui présente plusieurs canaux d'air (20),
- au moins deux papillons des gaz (7) qui sont aménagés à rotation dans au moins un canal d'air (20) et présentent respectivement un arbre (8, 8') s'étendant le long de la section transversale du canal d'air (20), dans laquelle respectivement un levier d'articulation (4) est aménagé à une extrémité (14) de chaque arbre (8, 8') et en dehors du canal d'air (20),
- une tige de couplage (1), qui est reliée à tous les leviers d'articulation (4), dans laquelle la tige de couplage (1) et le levier d'articulation (4) sont aménagés dans le boîtier,
**caractérisée en ce qu'**à l'autre extrémité (15) d'un arbre unique (8') est fixé un levier de commande (17) qui est aménagé en dehors du boîtier.

2. Tubulure d'admission selon la revendication 1, **caractérisée en ce qu'**un joint étanche (16) se trouvant à l'intérieur du boîtier est installé sur l'autre extrémité (15) de l'arbre unique (8'), lequel joint étanche s'applique, d'une part, de manière étanche sur l'arbre (8') et, d'autre part, de manière étanche sur le boîtier (27).

3. Tubulure d'admission selon la revendication 2, **caractérisée en ce que** le joint étanche (16) est une rondelle annulaire profilée avec au moins une lèvre (31) dépassant dans l'ouverture (30) du joint étanche et/ou avec un pied de forme annulaire (35) dépassant sur une face du joint étanche.

4. Tubulure d'admission selon l'une quelconque des revendications précédentes, **caractérisée en ce que** le levier d'articulation (4) et/ou le levier de commande (17) est ou sont fixés sur l'arbre au moyen de fixations par vissage et/ou par encliquetage.

5. Tubulure d'admission selon l'une quelconque des revendications précédentes, **caractérisée en ce que** le levier d'articulation et la tige de couplage sont reliés l'un à l'autre via des articulations à tête sphérique (12).
